**Europäisches Patentamt**

**European Patent Office**

**Office européen des brevets**

(19)

(11) **EP 1 416 688 A1**

(12) **EUROPEAN PATENT APPLICATION**

(43) Date of publication:
**06.05.2004 Bulletin 2004/19**

(51) Int Cl.[7]: **H04L 25/02**, H04L 27/26

(21) Application number: **02292728.9**

(22) Date of filing: **31.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Motorola Inc.**<br>**Schaumburg, IL 60196 (US)**<br><br>(72) Inventors:<br> • **Mazet, Laurent**<br>  **75010 Paris (FR)** | • **Buzenac-Settineri, Véronique**<br>  **91300 Massy (FR)**<br> • **Courville, Marc de**<br>  **75014 Paris (FR)**<br> • **Duhamel, Pierre**<br>  **92350 Plessis Robinson (FR)**<br><br>(74) Representative: **Wharmby, Martin Angus**<br>**Motorola Centre de Recherche,**<br>**Parc Technologique de St. Aubin,**<br>**Route de L'Orme au Merisier,**<br>**Immeuble Columbia**<br>**91190 Gif-sur-Yvette (FR)** |

(54) **Iterative channel estimation in multicarrier receivers**

(57)    A method of channel estimation comprises the steps of receiving a signal and applying a fast fourier transform (FFT) to obtain a plurality of frequency domain sub-carriers. Probabilities of coded bits are produced and channel coefficient estimation is performed for each of the plurality of frequency domain sub-carriers using channel coefficient estimates of other ones (preferably all others) of the plurality of frequency domain sub-carriers, which are based on the probabilities on coded bits. An OFDM communication unit and OFDM communication system are also provided.

FIG. 5

EP 1 416 688 A1

**Description**

**Field of the Invention**

This invention relates to an estimation of radio-channel propagation conditions, in order to equalise their effect on transmitted data. The invention is applicable to improving an accuracy of channel estimation in an orthogonal frequency division multiplex (OFDM) wireless receiver.

**Background of the Invention**

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs).

Wireless communication systems are distinguished over fixed communication systems, such as the public switched telephone network (PSTN), principally in that mobile stations move between BTS (and/or different service providers) and in doing so encounter varying radio propagation environments.

Methods of communicating information simultaneously exist where communication resources in a communication network are shared by a number of users. Such methods are termed multiple access techniques. A number of multiple access techniques exist, such as frequency division multiple access (FDMA), time division multiple access (TDMA), and code division multiple access (CDMA).

The communication link from a BTS to a MS is referred to as the down-link. Conversely, the communication link from a MS to the BTS is referred to as the up-link.

In wireless communication systems, there is a need to estimate the effect caused by the 'wireless communication channel' on the data being transmitted. Channel estimation is required so that the received data can be equalised to reduce, restore or minimise signal degradation caused by such transmission channel impairments. A radio channel is said to be equalised if the channel impairments can be eliminated or significantly reduced.

In the field of this invention, the most conventional strategy in estimating radio channel propagation conditions is to model the radio channel by a finite impulse response (FIR) filter. The channel estimation is typically performed by periodically transmitting a known data sequence, generally referred to as a training sequence, over the desired radio channel. Such training sequences are a-priori known by the receiver. The training sequence is extracted from the received, desired data stream and is used to compute channel estimates.

In the field of this invention, namely that of Orthogonal Frequency Division Multiplexed (OFDM) systems, also termed multi-carrier systems, the data stream is divided into several (N) sub-streams. These sub-streams are transmitted on 'N' orthogonal sub-carriers at different frequencies, for example by means of an inverse fast Fourier transform (IFFT) at the transmitting unit.

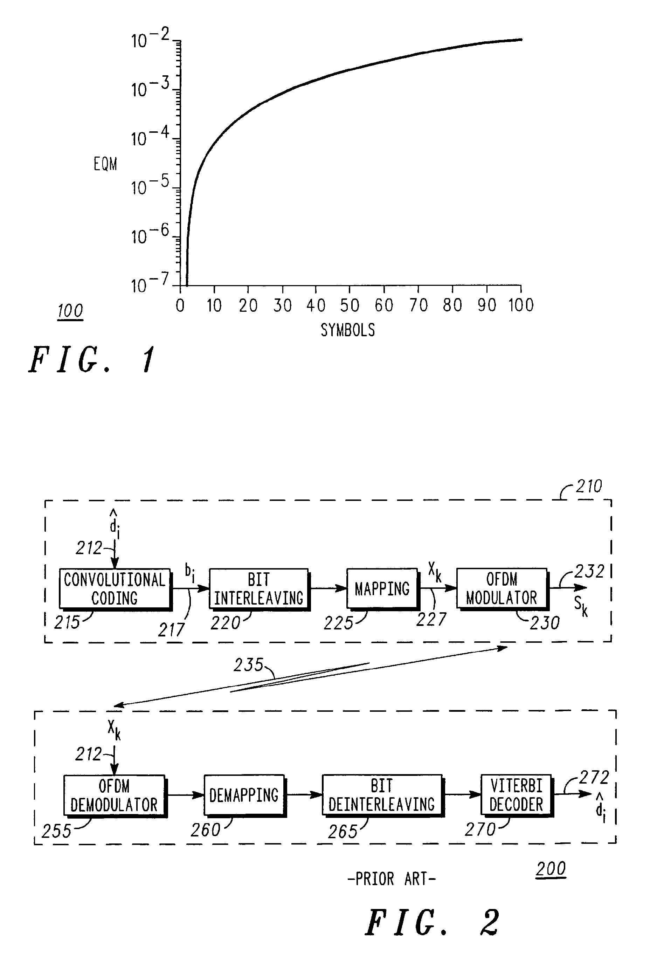

One of the main advantages of OFDM systems is their very simple equalization scheme, which is reduced to a multiplication of the FFT outputs (of each carrier frequency) by the frequency domain channel coefficients. Of course, the true channel coefficients are unknown, and have to be estimated. As an illustration, the mean square error between the true channel coefficients and the channel coefficients at time 0 (time 0 being chosen when a training symbol is received) is plotted in function of time on FIG. 1, for an HIPERLAN/2 channel with a mobile terminal moving at 3m/s.

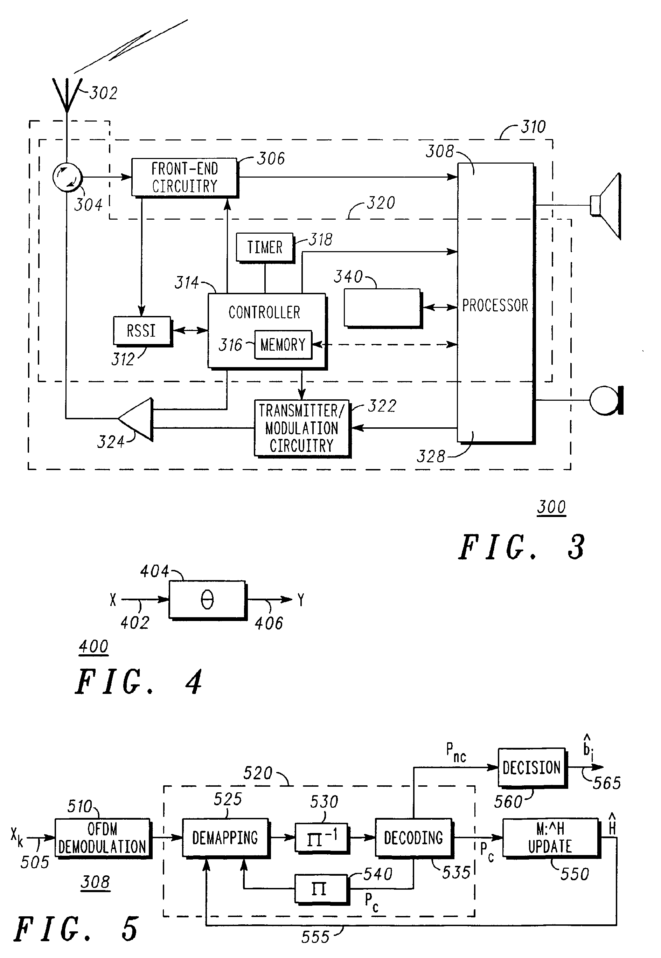

Referring now to FIG. 2, a classical Bit interleaved and convolutionally coded (BICC) OFDM system 200 is shown. The BICC OFDM system 200 includes a BICC OFDM transmitter 210. The BICC transmitter 210 receives a data stream 212 $d_i$ and convolutionally codes 215 the data stream to produce an output $b_i$ 217. The convolutionally coded output $b_i$ 217 is input to a bit interleaver 220. The output from the bit interleaver 220 is then input to a mapping function 225, which associates a subset of bits $x_k$ 228 to a location on a constellation. The type of constellation generated by the transmitter 210 is dependent upon the modulation scheme employed by the OFDM modulator 230. The OFDM modulator then outputs the OFDM modulated signal over the communication channel 235.

A BICC OFDM receiver 250 receives the OFDM modulated signal over the communication channel 235. In effect, the receiver 250 performs the inverse operations of the BICC OFDM transmitter 210. In this regard, the receiver 250 includes an OFDM demodulator 255 to translate the received constellation locations into a sequence of bit subsets. The bit subsets are then input to a demapping function 260. In the demapping function, bit metrics are computed to feed the Viterbi decoder 270. This computation involves the frequency channel coefficients, which must be estimated periodically. A bit deinterleaving function 265 arranges the received bit-stream for decoding in the Viterbi decoder 270.

The above receiver arrangement presents a number of significant drawbacks. In particular, the process to demap, decode and perform channel estimation separately, as three distinct and independent functions, only enables the respective individual operations to be optimised.

In J. Boutros, C. Lamy , F. Boixadera, "Bit-interleaved coded modulation for multiple-input multiple-output channels",IEEE ISSSTA , Sept. 2000, a method performing joint de-mapping, decoding and channel estimation using an estimation-maximisation (EM) algorithm and a turbo-demodulation procedure has been proposed. However, the proposed algorithm has been derived in a single carrier context and is therefore unsuitable for OFDM implementation.

A turbo channel estimation method using EM algorithm in an OFDM context has been proposed in E. Jaffrot, M. Siala, "Turbo channel estimation for OFDM systems on highly time and frequency selective channels", Proc. ICASSP2000. However, the channel estimation method assumes, as a pre-requisite, a phase-shift keyed (PSK) modulation scheme. As such, the method is limited in its applications and works only for binary PSK (BPSK) and quadrature PSK (QPSK) mapping. Thus, it cannot be applied to high bit rate applications such as HIPERLAN/2 (which uses a quadrature amplitude modulation (QAM) scheme). Moreover, it uses pilot carriers, which reduces the application bit rate.

Thus, there exists a need in the field of the present invention to provide an improved channel estimation method in an OFDM communication system, wherein at least some of the aforementioned disadvantages may be alleviated.

**Statement of Invention**

The present invention provides a method of channel estimation and a receiver for performing channel estimation as described in the accompanying claims.

**Brief Description of the Drawings**

FIG. 1 illustrates a graph of mean square error (MSE) for a BRAN A channel with a mobile terminal (MT) moving at 3m/s; and

FIG. 2 shows a simplified processing block diagram of a bit-interleaved and convolutionally coded OFDM communication system.

Exemplary embodiments of the present invention will now be described, with reference to the accompanying drawings, in which:

FIG. 3 illustrates a wireless communication unit adapted in accordance with a preferred embodiment of the present invention;

FIG. 4 illustrates a channel estimation model applicable to the preferred embodiment of the present invention.

FIG. 5 illustrates a block diagram of a decoding unit adapted in accordance with a preferred embodiment of the present invention;

FIG. 6 illustrates two examples of mapping that can be used in the preferred embodiment of the present invention;

FIG. 7 illustrates a model of an OFDM system used in the preferred embodiment of the present invention;

FIG. 8 illustrates a block diagram of a decoding unit's forward-backward algorithm in accordance with a preferred embodiment of the present invention; and

FIG. 9 shows bit-error-rate simulation results of the channel estimator according to the preferred embodiment of the invention.

**Description of Preferred Embodiments**

In summary, the preferred embodiments of the invention described below perform blind channel estimation for each OFDM symbol, which allows the receiver to track the channel variations, and consequently to increase the time between training sequences. In particular, the channel estimate of the frequency channel coefficients for each OFDM symbol is performed using an Expectation-Maximization (EM) algorithm that includes estimated channel coefficients using at least one other, and preferably all the other sub-carriers.

Referring now to FIG. 3, there is shown, by way of example, a block diagram of a wireless communication unit, adapted to support the inventive concepts of the preferred embodiments of the present invention. The wireless communication unit 300 contains an antenna 302 preferably coupled to an antenna switch 304 that provides isolation between a receiver and a transmitter chain within the wireless communication unit 300.

The receiver chain shown includes receiver front-end circuitry 306 (effectively providing reception, filtering and intermediate or base-band frequency conversion). The front-end circuit 306 is serially coupled to a signal processing function 308. An output from the signal processing function is provided to a suitable output device 310.

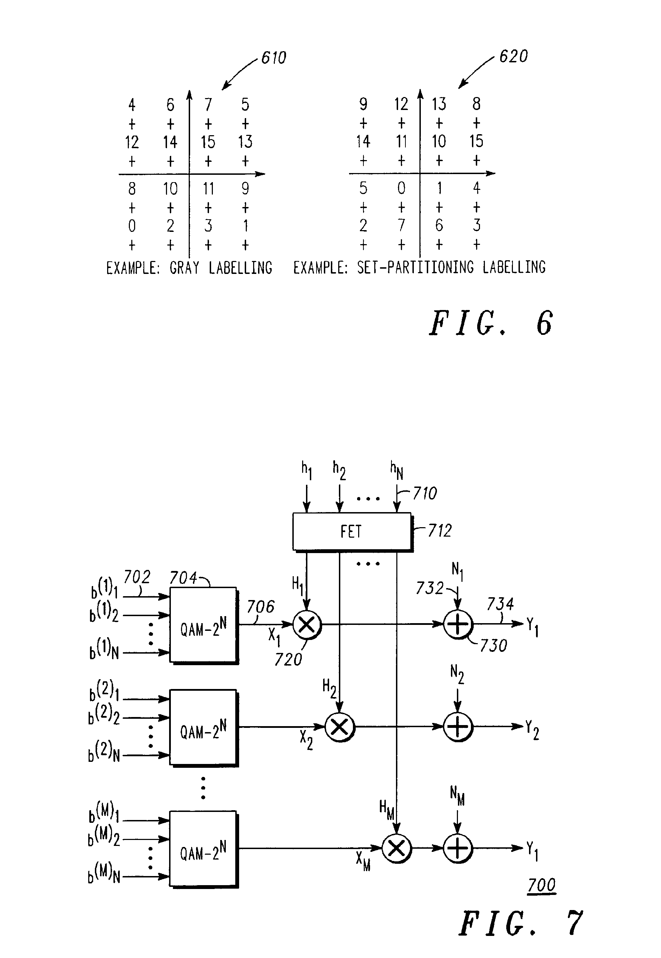

The signal processing function 308 performs all signal processing functions for the wireless communication unit 300, including demodulation, de-mapping, bit deinterleaving, channel estimation and decoding. In accordance with the preferred embodiments of the present invention, the signal processing unit 308 has been adapted to perform EM-based channel estimation, using probabilities on coded bits. These probabilities may be provided by any channel decoding scheme yielding soft outputs, e.g. a so-called BCJR algorithm - see L. Bahl, J. Cocke, F. Jelinek and J. Raviv, "Optimal Decoding of Linear Codes for Minimizing Symbol Error Rate", IEEE transaction on Information Theory, March 1974. The preferred embodiment uses a turbo-demodulation process, such that it is able to jointly perform de-mapping and decoding of the received signal. The signal processing function 308 is further adapted inasmuch as it employs a new channel estimation method, as is further described with regard to FIG. 5.

The receiver chain shown also includes received signal strength indicator (RSSI) circuitry 312 (shown coupled to the receiver front-end 306, although the RSSI circuitry 312 could be located elsewhere within the receiver chain). The RSSI circuitry is coupled to a controller 314 for maintaining overall subscriber unit control. The controller 314 is also coupled to the receiver front-end circuitry 306 and the signal processing function 308 (generally realised by a digital signal processor (DSP)). The controller 314 may therefore receive bit error rate (BER) or frame error rate (FER) data from recovered information. The controller 314 is coupled to the memory device 316 for storing operating regimes, such as decoding/encoding functions and the like. A timer 318 is typically coupled to the controller 314 to control the timing of operations (transmission or reception of time-dependent signals) within the wireless communication unit 300.

As regards the transmit chain, this essentially includes an input device coupled in series via transmit signal processor 328 to a transmitter/ modulation circuit 322. Thereafter, any transmit signal is passed through a power amplifier 324 to be radiated from the antenna 302. The transmitter/ modulation circuitry 322 and the power amplifier 324 are operationally responsive to the controller, with an output from the power amplifier coupled to the duplex filter or circulator 304. The transmitter/ modulation circuitry 322 and receiver front-end circuitry 306 comprise frequency up-conversion and frequency down-conversion functions (not shown).

Of course, the various components within the wireless communication unit 300 can be arranged in any suitable functional topology that is able to utilise the inventive concepts of the present invention. Furthermore, the various components within the wireless communication unit 300 can be realised in discrete or integrated component form, with an ultimate structure therefore being merely an arbitrary selection. The preferred decoding and channel estimation function can be implemented in software, firmware or hardware, with the function being implemented in a software processor (or indeed a digital signal processor (DSP)) that performs the decoding function, merely a preferred option.

The transmitter signal processor 328, which is shown as being distinct from the receiver signal processor 308 for clarity purposes only, includes a convolutional encoder or a turbo-coding function.

In accordance with a preferred embodiment of the present invention, an improved channel estimation algorithm for the OFDM system is included. The channel estimation uses an Expectation-Maximisation (EM) algorithm. This is a parametric estimation algorithm, which attempts to estimate the parameters 'θ' 404 of a system 400 from the observations of its output y 406 blindly without knowing its input x 402, as shown in the model in FIG. 4.

The EM algorithm is an iterative procedure, which maximizes the likelihood function in two steps:

(i) A first Expectation step (E-step): which comprises a computation of:

$$E_x[P(x|\, y,\theta^{(p)})] \tag{1}$$

and

(ii) A second Maximization step (M-step):

$$\theta^{(p+1)} = \arg\max_{\theta} P(y\,|\,\theta, \hat{x}^{(p)}) \tag{2}$$

In a practical implementation, the maximisation (M-)step is performed by maximizing the auxiliary function:

$$Q(\theta,\theta^{(p)}) = E_x[\log P(x, y|\theta)|y,\theta^{(p)}] \qquad\qquad [3]$$

In accordance with the preferred embodiment of the present invention, the auxiliary function of the channel estimation algorithm has been adapted to take into account OFDM specificities. Indeed, the auxiliary function has been rewritten as:

$$Q(H_m, H_m^{(p)}) = E_{x_m}\left[\log P(x_m, y_m, \tilde{H}^{(m)} \mid H_m) \mid y_m, H_m^{(p)}\right] \qquad [4]$$

where: $\tilde{H}^{(m)}$ stands for the vector $H$ with a $0$ on the $m^{th}$ component. This allows, when estimating the channel coefficient of the m-th sub-carrier, to use and take advantage of the prior estimations of the channel coefficients of the other frequency domain sub-carriers.

In addition, the Expectation step has been configured to be an estimation of the probability on decoded bits, which are needed for the M-step. These probabilities are provided by any decoding scheme yielding soft outputs. Furthermore, the preferred embodiment of the present invention, proposes to use a turbo-demodulation procedure, in order to optimise jointly the de-mapping and the decoding steps. In this manner, the decoding algorithm leads to a much better performance than a non-iterative decoding scheme.

However, it is within the contemplation of the invention that the inventive concepts herein described are applicable to any convolutional encoder, i.e. it is applicable for any rate and any puncturing scheme. Furthermore, the decoding scheme of the present invention can be applied to any encoded data that can be decoded by a soft output decoder, i.e. any convolutional or turbo decoder.

Referring now to FIG. 5, a block diagram model 500 of the preferred channel estimation procedure is illustrated. The received data stream 505 is demodulated in OFDM demodulation function 510. The output from the demodulation function 510 is input to a channel estimation function, which incorporates an estimation function 520 and a maximization function 550.

The OFDM demodulated signal is input to a de-mapping function 525, which outputs de-mapped signals to a deinterleaving function 530, and thereafter to a soft output decoder function 535. In this manner, the channel estimation function is operational over both the de-mapping and decoding functions.

The de-mapping function in the preferred embodiment, i.e. the function that associates a subset of bits to a modulation constellation location, is able to operate with any labelling map. For example, as shown in FIG. 6, the de-mapping operation may be performed on a subset of a 16-QAM signal, which is composed of four bits. Each subset has to be associated to one of the sixteen positions of the constellation. There are a number of different ways to define the association function, which affect the performance of the decoding system. For example, constellation 610 in FIG. 6 illustrates a Gray labelling structure, which is deemed optimum when a Viterbi decoder is used. However, when turbo-demodulation is used, an alternative mapping format such as the set partitioning format 620 may provide better results.

The output from the decoding function 535, is fed back to the de-mapping function 525 via an interleaving function 540. The output from the improved estimation function 520 is input to a maximization function 550. The output from the maximization function 550 is input to the de-mapping function 525.

It is noteworthy that this arrangement also yields decoded bits, in a bit-stream 535. The bit decisions are made from decision function 560. Thus, the improved channel estimation arrangement is a joint channel estimation and decoding scheme.

In accordance with the preferred embodiment of the present invention, the channel estimation operation has been adapted to take into account the OFDM specificities, using the coded bits on neighbouring frequency channels

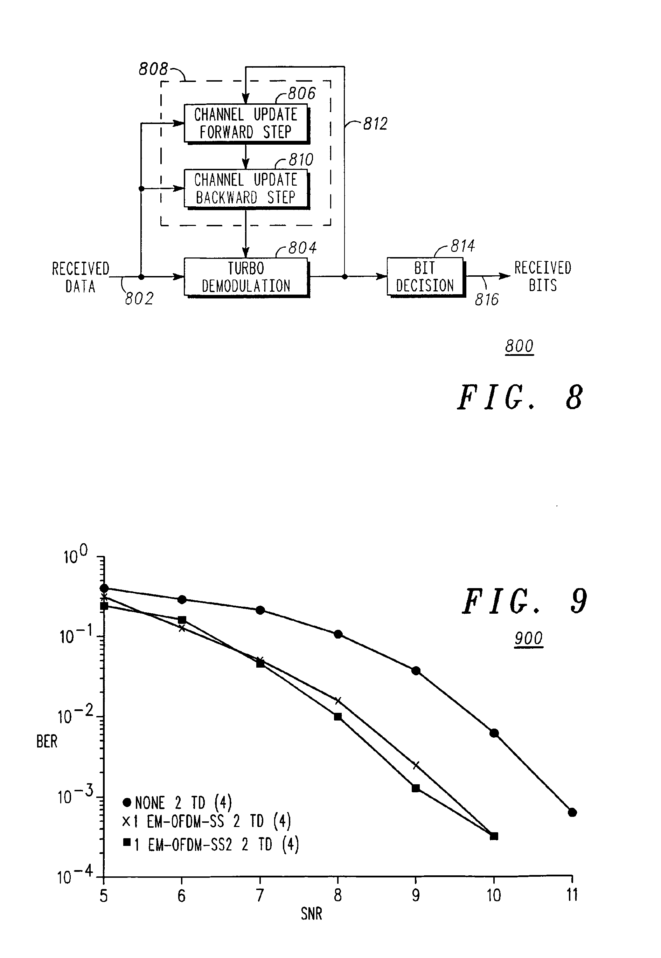

Referring now to FIG. 7, a block diagram of a parallel equivalent representation of a cyclic-prefix OFDM modulator-demodulator 700 is illustrated. In effect, an OFDM transmitter wishes to emit a set of bits

$$\left\{b_n^{(m)}\right\}_{\substack{1\le m\le M \\ 1\le n\le N}}$$

702 over a channel

$$\left\{h_l\right\}_{1\le l\le L}$$

using, say, a $2^N$-QAM scheme 704.

First every subset of Nbits

$$\left\{b_n^{(m)}\right\}_{1 \le n \le N}$$

702 is modulated into a symbol $x_m$. In the OFDM context, the

$$\left\{x_m\right\}_{1 \le m \le M}$$

symbols 706 are transformed from a frequency domain representation into a time domain using an inverse fast fourier transform (IFFT). The time-domain signals are then serialized and convolved by the channel filter. The signals are effectively corrupted by noise

$$\left\{n_m\right\}_{1 \le m \le M}$$

732 before they are finally returned into the frequency domain using a FFT (not shown) to produce an output signal

$$\left\{y_m\right\}_{1 \le m \le M}$$

734.

It is noteworthy that in a standard OFDM transmitted signal, the signal is confined into a spectrum mask by precluding some carriers from being used, especially the ones at the top and the bottom of the FFT. In this regard, such carrier values are set to zero.

An important characteristic of OFDM communication systems, utilised in the preferred embodiment of the present invention, is that OFDM systems are dimensioned so that the length of the channel impulse response ('CIR') is smaller than the cyclic prefix size. Accordingly, it is possible to use the classical OFDM system model representation of FIG. 7.

Let us consider the case where h is a vector of M independent variables, with its first L components being L independent Rayleigh fading values with variance $\sigma_1^2$, $1 = 1, ..., L$. Let us further assume that the M-L other components are independent Rayleigh fadings with a small variance $\varepsilon^2$.

If the variance $\varepsilon$ is small enough, $h$ has been determined as providing a reasonably good model of the time domain channel. This leaves the frequency domain channel as being represented by:

$$H = Fh, \quad \text{with} \quad F = \frac{1}{\sqrt{M}}\left[e^{-2i\pi\frac{lk}{M}}\right]_{(l,k)\in[1,M]^2} \qquad [5]$$

In accordance with the preferred embodiment of the present invention, let us define a new auxiliary function that provides an improved estimate of a channel coefficient $H_m$. It is noteworthy that the improved channel estimate considers the channel coefficients on all other carriers in order to refine/track the primary channel coefficient.

The inventors have appreciated that knowledge of the channel coefficients from other carriers is useful, as the decoder needs an estimate of the frequency channel coefficients

$$\left\{H_m\right\}_{1 \le m \le M}$$

to eradicate the channel effects from the received coded bits. Indeed, in the preferred embodiment of the present invention, the frequency channel coefficients from the Fourier transform of the time channel coefficients

$$\{h_l\}_{1\le l\le L}$$

are utilised in this regard.

Thus:

$$\underline{H} = F\underline{h} \qquad\qquad [6]$$

Where:

$\underline{H}$ is a column vector of

$$\{H_m\}_{1\le m\le M} \ ,$$

$\underline{h}$ is a column vector of

$$\{h_l\}_{1\le l\le L}$$

filled with zeros for the M-L last coefficients, and
$F$ is a '$M\times M$' matrix filled with Fourier coefficients.

At the opposite end of the time domain, the values of elements of $\underline{H}$, are unknown. Indeed, due to the introduction of white noise in the model, it can be readily assumed that all of the elements are corrupted.

The inventors of the present invention have appreciated that a standard channel estimation method, such as $\hat{H}_m = \dfrac{y_m}{x_m}$, where $x_m$ is a known symbol, leads to a poor result.

In contrast, the proposed method of using the knowledge of the channel coefficients from other carriers helps to refine the values of channel estimate. In particular, the definition of the statistical model $h$ and the cost function are key distinguishing features of the inventive concepts of the present invention.

Thus, in the auxiliary function, we add $\tilde{H}^{(m)}$ in the following manner:

$$Q(H_m, H_m^{(p)}) = E_{x_m}\left[\log \mathrm{P}(x_m, y_m, \tilde{H}^{(m)} \mid H_m) \mid y_m, H_m^{(p)}\right] \qquad [7]$$

Where:

$\tilde{H}^{(m)}$ stands for the vector $H$ with a $0$ on the $m^{th}$ component.

The maximization of this function leads, after some computational effort, to the following channel estimate update formula:

$$H_m^{(p+1)} = \frac{\displaystyle\sum_{x_m} \mathrm{P}\!\left(y_m\big|x_m, H_m^{(p)}\right)\mathrm{P}(x_m)\left[\overline{y_m\,x_m} - \sigma^2\left(\Delta_{SH}^{-1}\right)_m \tilde{H}^{(m)}\right]}{\displaystyle\sum_{x_m} \mathrm{P}\!\left(y_m\big|x_m, H_m^{(p)}\right)\mathrm{P}(x_m)\left[|x_m|^2 - \frac{\sigma^2}{\upsilon^2} + \frac{\upsilon^2}{\gamma^2}\right]} \qquad [8]$$

where:

$$\gamma^{-2} = \left[\Delta_{SH}^{-1}\right]_{(m,m)}, \quad \Delta_{SH} = SF^*\mathrm{Diag}([\sigma_1^2 \cdots \sigma_L^2 \varepsilon^2 \cdots \varepsilon^2])FS^{\mathrm{T}} \qquad [9]$$

and

$$\upsilon^2 = \frac{1}{M}\left[\sum_{l=1}^{L}\sigma_l^2 + (M-L)\varepsilon^2\right|_{\big]} . \qquad [10]$$

S is the information carriers selection matrix. When dealing with a full sub-carrier OFDM symbol, $\gamma^2$ can be rewritten into:

$$\gamma^{-2} = \frac{1}{M}\sum_{l=1}^{L}\sigma_l^2 + \frac{M-L}{M}\varepsilon^2 . \qquad [11]$$

It is noteworthy that the general expression of $\gamma^2$ of equation [9] takes into account the fact that some sub-carriers are not used, which is always the case in practice.

In practice, three parameters are needed to implement the aforementioned formula, namely: $P(y_m|x_m, H_m^{(p)})$, $P(x_m)$ and $\tilde{H}^{(m)}$ .

If we assume that the channel additive noise is a Gaussian white noise of variance $\sigma^2$, $P(y_m|x_m,H_m^{(p)})$ may be viewed as:

$$P(y_m|x_m,H_m^{(p)}) = \frac{1}{\pi\sigma^2}e^{\frac{|y_m - H_m^{(p)}x_m|^2}{\sigma^2}} \qquad [12]$$

Where:

$P(x_m)$ is the product of the probabilities of each coded bit involved in the symbol $x_m$. The turbo-demodulation process provides an estimation of these probabilities. Thus, $P(x_m)$ is the result of the E-step; and

$\tilde{H}^{(m)}$ is unknown, but each of its component $\tilde{H}_i^{(m)}$ may be taken as the current estimate of the channel coefficient, i. e. $\tilde{H}_i^{(m)} = H_i^{(p+1)}$ for $i<m$ and $\tilde{H}_i^{(m)} = H_i^{(p)}$ for $i>m$.

However, the inventors of the present invention have recognised that the above methodology would lead to the last set of coefficients being estimated more accurately than the first set of coefficients. Hence, to remove this drawback and improve the estimation, the inventors propose implementing a 'forward-backward' procedure to further improve the channel refinement.

The preferred implementation of the forward/backward process is illustrated in FIG. 8. The channel refinement is performed on a carrier-by-carrier basis. Received data is input to the Turbo demodulation estimation process 804, as illustrated in FIG. 6. Furthermore, the received data is also input to the maximization process 806, which comprises an algorithm having two steps, i.e. one 'forward' step 808 and one 'backward' step 810. The operation of the forward step 808 and the backward step 810 is performed on the received data and the channel estimation values output 812 from the estimation algorithm 804. The operation of the forward step 808 and the backward step 810 is performed making bit decisions 814 using the information bit probabilities. The output of the process is a sequence of received bits 816.

In accordance with the preferred embodiment of the present invention, the forward step is implemented as follows:

The $H_m$ coefficients are estimated from $m=1$ to $m=M$.

In this step, when computing the channel coefficient on sub-carrier m, the channel coefficient estimates on the other sub-carriers 1, such that m<1≤M, come from the previous iteration. The channel coefficient estimates on the other sub-carriers 1 such that 1 ('one') ≤1<m come from the actual iteration.

The backward step is implemented as follows:

The $H_m$ coefficients are estimated from $m=M$ to $m=1$, using the estimates of the forward step.

In this step, when computing the channel coefficient on sub-carrier m, the channel coefficient estimates on the other sub-carriers 1 such that m<1≤M come from the forward step, and the channel coefficient estimates on the other sub-carriers 1 such that 1 ('one') ≤1≤m come from the present backward step.

In this manner, approximately the same level of accuracy of each channel coefficient can be achieved, thereby improving the channel estimate performance.

To fully evaluate the performance of this method, a set of Monte-Carlo simulations was performed over two hundred channels to estimate the bit error rate (BER) and the packet error rate (PER). The simulation context was performed using one hundred OFDM symbols of sixty-four sub-carriers preceded by two pilot symbols. This is useful in obtaining a first channel estimate. The simulation was performed over sixteen independent Rayleigh fading channels. A half rate convolutional encoder (035, 023) was used. Symbols were bit-interleaved with a random pattern and modulated by a 16-QAM constellation.

The results of the simulation are illustrated in FIG. 9 and FIG. 10. Referring now to FIG. 9, a comparison of the average BER versus signal to noise ratio (SNR) is illustrated for an OFDM system. FIG. 10 illustrates a comparison of the average PER versus SNR for the OFDM system.

In both FIG. 9 and FIG. 10, the OFDM system does not refine channel estimates and performs only two iterations of the turbo-demodulator per global iteration. Three curves are shown:

(i) A first curve indicates the performance without employing the inventive concepts herein before described, identified as 'NONE 2 TD';

(ii) A second curve illustrates the performance when implementing the proposed invention, identified as '1 EM-OFDM-SS 2 TD for $\varepsilon^2=3e^{-3}$; and

(iii) A third curve illustrates the performance when implementing the proposed invention, identified as '1 EM-OFDM-SS2 2 TD' for $\varepsilon^2=1e^{-16}$.

It is noteworthy that, by implementing the inventive concepts herein described, an improvement of around 2dB in BER/PER can be achieved. Moreover, provided that the variance $\varepsilon$ parameter is small enough the setting of the parameter is not critical. Hence, the user does not have to perform precise tuning on the variance $\varepsilon$ parameter.

It is within the contemplation of the invention that the aforementioned inventive concepts can be applied to any element in the communication system that performs decoding and channel estimation, for example a BTS communication unit and/or a MS.

In the preferred embodiment of the present invention, the maximization step utilises a forward-backward approach. However, it is within the contemplation of the invention that alternative maximization techniques may be used in the decoder such that the decoder is still able to benefit from the inventive concepts described herein.

It will be understood that a method of channel estimation performed by a communication unit operating in an OFDM communication system as described above, tends to provide at least some of the following advantages:

(i) A mechanism to perform jointly de-mapping, decoding and channel estimation is described, whereby their performance can be globally optimised. In particular, the modification of the EM cost function results in the modification of the channel update formula, which provides an improved decoding performance.

(ii) There is no estimation error in a noiseless case. In practice, this means that the proposed estimator performs better than the strongest-path method based estimator for high SNR conditions.

(iii) Estimation noise is partially removed from the selected channel coefficients.

(iv) There is minimal additional complexity when compared to prior art arrangements.

(v) The inclusion of OFDM specificities in a novel and inventive approach enables bit-interleaved coded modulation improvements proposed by J. Boutros et al. to be translated to an OFDM scenario. In particular, the inventive concepts can be applied to any kind of mapping, and does not use pilot carriers. Nevertheless, the inventive concepts hereinbefore described may be used in the presence of pilot carriers, if desired.

Whilst specific, and preferred, implementations of the present invention are described above, it is clear that one skilled in the art could readily apply further variations and modifications of such inventive concepts.

Thus a method of channel estimation performed by a communication unit operating in an OFDM communication system has been provided wherein at least some of the aforementioned disadvantages with prior art arrangements have been alleviated.

**Claims**

1. A method of channel estimation in a wireless orthogonal frequency division multiplexed (OFDM) communication system (700), comprises the steps of:

   receiving a signal in the time domain;
   applying a Fourier transform to said received signal to obtain a frequency domain signal including a plurality of sub-carriers;
   estimating probabilities of coded bits for at least said plurality of frequency domain sub-carriers; and
   performing channel coefficient estimation for at least said plurality of frequency domain sub-carriers

   **characterised in that**
   said step of performing channel coefficient estimation for each of said plurality of frequency domain sub-carriers uses channel coefficient estimates for at least one other of said plurality of frequency domain sub-carriers.

2. A method of channel estimation according to Claim 1, wherein said step of performing channel coefficient estimation for substantially each of said plurality of frequency domain sub-carriers uses channel coefficient estimation benefits from said channel coefficient estimates for substantially all the other frequency domain sub-carriers of said plurality.

3. A method of channel estimation according to Claim 2, wherein said plurality of frequency domain sub-carriers comprises substantially all the sub-carriers of said frequency domain signal.

4. A method of channel estimation according to any preceding Claim and comprising repeating said steps of estimating probabilities and performing channel coefficient estimation so as to improve iteratively an accuracy of said channel coefficient estimates.

5. A method of channel estimation according to Claim 4, wherein the kth channel coefficient estimation is substantially in accordance with the following equation:

$$H_k^{(p+1)} = \frac{\mathrm{P}\left(y_k | x_k, H_k^{(p)}\right)\left[y_k \overline{x_k} - \sigma^2\left(\Delta^{-1}\right)_k \tilde{H}^{(k)}\right]}{\mathrm{P}\left(y_k | x_k, H_k^{(p)}\right)\left[|x_k|^2 - \dfrac{\sigma^2}{\upsilon^2} + \dfrac{\upsilon^2}{\gamma^2}\right]}$$

where $H_k^{(p+1)}$ is the (p+1)th estimate and $H_k^{(p)}$ the pth estimate of the channel coefficients, $y_k$ is the received data corresponding to the transmitted data $x_k$, $\sigma^2$ is the channel noise variance, $\tilde{H}^{(k)}$ is the channel coefficient vector $H$ with a 0 on the $k^{th}$ component and $\Delta^{-1}$, $\upsilon^2$ and $\gamma^2$ have the meanings indicated hereinabove.

6. A method of channel estimation according to any of Claim 4 or 5, wherein the step of performing channel coefficient estimates comprises replacing previously estimated channel coefficients of said plurality of frequency domain sub-carriers with respective current channel coefficient estimates.

7. A method of channel estimation according to any of Claims 4 to 6, wherein repeating said step of performing channel coefficient estimation comprises applying a cost function on an Expectation-Maximization algorithm on said plurality of frequency domain sub-carriers to improve said channel coefficient estimates.

8. A method of channel estimation according to Claim 7, wherein said step of performing a channel coefficient estimation includes calculating an auxiliary function, the method further **characterised by** the step of:

   performing a Maximisation process on said auxiliary function in substantially the following manner:

$$Q(H_m, H_m^{(p)}) = E_{x_m}\left[\log \mathrm{P}(x_m, y_m, \tilde{H}^{(m)} \mid H_m) \mid y_m, H_m^{(p)}\right].$$

9. A method of channel estimation according to any of Claims 4 to 8, wherein said step of performing a channel coefficient estimation includes applying a forward-backward algorithm on said received signal to said plurality of channel coefficient estimates in which estimates are made in a first order of said plurality of frequency domain sub-carriers and subsequently estimates are made in a reversed order of said plurality of frequency domain sub-carriers so as substantially to equalise an estimation accuracy across said plurality of frequency domain sub-carriers.

10. A method of channel estimation according to any preceding Claim, wherein said step of channel estimation is performed on received data that is decoded by a soft output decoder, said decoder providing estimations of said probabilities.

11. An orthogonal frequency division multiplexed (OFDM) receiver for a method of channel estimation as claimed in any preceding Claim, and comprising:

   demodulation means for applying said Fourier transform to said received signal to obtain said frequency domain signal including a plurality of sub-carriers;
   decoding means for decoding the received signal and estimating said probabilities of coded bits for at least said plurality of frequency domain sub-carriers; and
   channel estimation means for performing channel coefficient estimation for each of said plurality of frequency domain sub-carriers using channel coefficient estimates for at least one other of said plurality of frequency domain sub-carriers.

100

*F I G.   1*

-PRIOR ART-                    200

*F I G.   2*

FIG. 3

300

400

FIG. 4

FIG. 5

EXAMPLE: GRAY LABELLING    EXAMPLE: SET-PARTITIONING LABELLING

*FIG. 6*

*FIG. 7*

14

FIG. 8

*800*

FIG. 9

*900*

European Patent
Office

**EUROPEAN SEARCH REPORT**

Application Number

EP 02 29 2728

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PANAYIRCI, ÇIRPAN: "Maximum a posteriori multipath fading channel estimation for OFDM systems" EUROPEAN TRANSACTIONS ON TELECOMMUNICATIONS, vol. 13, no. 5, September 2002 (2002-09), pages 487-494, XP001133082 Milan, IT * section 4 * | 1-11 | H04L25/02 H04L27/26 |
| X | XIANGYANG ZHUANG, VOOK: "Iterative channel estimation and decoding for a turbo-coded OFDM system via the EM algorithm" IEEE INTERNATIONAL CONFERENCE ON ACOUSTICS, SPEECH, AND SIGNAL PROCESSING, 13 - 17 May 2002, pages 2337-2340, XP001148757 2002, Piscataway, NJ, USA, IEEE, USA ISBN: 0-7803-7402-9 * section 4 * | 1-11 | |
| | | | TECHNICAL FIELDS SEARCHED (Int.Cl.7) |
| X,D | JAFFROT, SIALA: "Turbo channel estimation for OFDM systems on highly time and frequency selective channels" IEEE INTERNATIONAL CONFERENCE ON ACOUSTICS, SPEECH, AND SIGNAL PROCESSING. PROCEEDINGS, 5 - 9 June 2000, pages 2977-2980, XP002171257 New York, US * section 6 * | 1-11 | H04L |
| X | EP 1 154 602 A (LUCENT) 14 November 2001 (2001-11-14) * abstract; figure 8 * | 1-4,6-11 | |

-/--

The present search report has been drawn up for all claims

| Place of search | Date of completion of the search | Examiner |
|---|---|---|
| THE HAGUE | 4 March 2003 | Scriven, P |

EPO FORM 1503 03.82 (P04C01)

## EUROPEAN SEARCH REPORT

**European Patent Office**

**Application Number**

EP 02 29 2728

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 60940 A (GLENAYRE ELECTRONICS) 2 December 1999 (1999-12-02) * abstract * ----- | 1,11 | |

TECHNICAL FIELDS SEARCHED (Int.Cl.7)

The present search report has been drawn up for all claims

| Place of search | Date of completion of the search | Examiner |
|---|---|---|
| THE HAGUE | 4 March 2003 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 29 2728

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2003

| Patent document cited in search report | | Publication date | Patent family member(s) | | Publication date |
|---|---|---|---|---|---|
| EP 1154602 | A | 14-11-2001 | EP | 1154602 A1 | 14-11-2001 |
| WO 9960940 | A | 02-12-1999 | US | 6173011 B1 | 09-01-2001 |
| | | | AU | 4201899 A | 13-12-1999 |
| | | | CA | 2333527 A1 | 02-12-1999 |
| | | | CN | 1305356 T | 25-07-2001 |
| | | | EP | 1079758 A1 | 07-03-2001 |
| | | | WO | 9960940 A1 | 02-12-1999 |

For more details about this annex : see Official Journal of the European Patent Office, No. 12/82